# EUROPÄISCHE PATENTSCHRIFT

(11) **EP 0 440 854 B1**
(45) Veröffentlichungstag und Bekanntmachung des Hinweises auf die Patenterteilung: **04.10.1995**
(21) Anmeldenummer: 90102431.5
(22) Anmeldetag: 07.02.1990
(51) Int. Cl.: G21K 4/00

(54) **Verfahren zur Herstellung eines stimulierbaren Speicherleuchtschirmes**
Process of manufacturing a stimulable storage phosphor screen
Procédé de fabrication d'un écran d'enregistrement luminescent stimulable

(43) Veröffentlichungstag der Anmeldung: 14.08.1991
(73) Patentinhaber: SIEMENS AKTIENGESELLSCHAFT, 80333 München (DE)
(72) Erfinder: Blum, Wolfgang Prof. Dr. Ing., D-8520 Erlangen (DE); Wegerer, Tanja Cand. Ing., D-8520 Erlangen (DE); Brandner, Gerhard Dipl. chem. Dr. rer.nat., D-8502 Zirndorf (DE)

(56) Entgegenhaltungen:
- EP-A- 0 350 391
- FR-A- 2 521 781
- GB-A- 2 024 842
- GB-A- 2 045 795

## Beschreibung

Die Erfindung betrifft ein Verfahren zur Herstellung eines einkristallinen stimulierbaren Speicherleuchtschirmes für die latente Speicherung von Röntgenstrahlenbildern, bei dem die Auslesung der Röntgenstrahlenbilder durch Anregung mittels Strahlen einer ersten Wellenlänge erfolgt, worauf Strahlen einer zweiten Wellenlänge emittiert werden. Ein derartiges Verfahren ist beispielsweise aus der EP-A-0 174 875 bekannt.

Derartige Speicherleuchtstoffe werden bei Bildaufnahmevorrichtungen verwendet, wie sie beispielsweise in der DE-C-23 63 995 beschrieben ist. In einer derartigen Röntgendiagnostikeinrichtung wird als strahlenempfindlicher Wandler ein Speicherleuchtschirm aus einem Lumineszenz-Speicherleuchtstoff verwendet, der mit Röntgenstrahlen bestrahlt wird. Dadurch werden in dem Speicherleuchtstoff entsprechend der auftreffenden Strahlstärke Defektelektronen erzeugt, die in Potentialfallen (Traps) mit höherem Energieniveau gespeichert werden, so daß in dem Speicherleuchtschirm ein latentes Röntgenstrahlenbild gespeichert ist.

In einer Auslesevorrichtung wird die ganze Fläche dieses Speicherleuchtschirmes als Vorlage von einer zusätzlichen Strahlenquelle, dies kann beispielsweise ein Laser sein, bildpunktweise zum Leuchten angeregt. Durch die stimulierenden Strahlen werden die in den Traps gespeicherten Elektronen im Energieniveau angehoben und können in niedrigere Energieniveaus zurückfallen, wobei die Energiedifferenz in Form von Lichtquanten abgestrahlt wird. Dadurch emittiert der Speicherleuchtstoff Licht in Abhängigkeit von der in dem Speicherleuchtstoff gespeicherten Energie. Das auf Grund der Stimulation emittierte Licht wird detektiert und sichtbar gemacht, so daß das in dem Speicherleuchtstoff derart latent gespeicherte Röntgenstrahlenbild auslesbar ist.

Als Problem zeigt sich hierbei, daß der Speicherleuchtstoff für das Laserlicht nicht ausreichend transparent ist. Um ausreichende Röntgenquantenabsorptionen erzielen zu können, benötigt man eine Mindestdicke des Speicherleuchtstoffes. Im Falle eines nichttransparenten, dicht gepreßten oder gesinterten Leuchtstoffes wird der Laserstrahl durch den Leuchtstoff so stark geschwächt, daß die Eindringtiefe des Laserstrahles zu gering ist. Da die Energie nicht mehr ausreicht, die Defektelektronen auf das für die Rekombination erforderliche Energieniveau anzuheben, können die in den tieferen Schichten gespeicherten Informationen nicht mehr ausgelesen werden.

In der EP-A-0 174 875 ist ein Verfahren zur Herstellung eines Speicherleuchtschirmes beschrieben, bei dem die Leuchtstoffkörner des Speicherleuchtstoffes von einem Binder umhüllt auf eine Unterlage aufgebracht werden. Der Binder dient dabei zum Fixieren der Leuchtstoffkörner. Als Binder wird üblicherweise ein lichtdurchlässiges Trägermaterial verwendet, das sowohl für das anregende Laserlicht als auch für das emittierte Lumineszenzlicht transparent ist. Hierbei tritt aber das Problem auf, daß durch Streuung an den Leuchtstoffkörnern der Laserstrahl mit anwachsender Eindringtiefe immer breiter wird, so daß sich die Modulationsübertragungsfunktion des gesamten Systems verschlechtert. Auch weist ein Speicherleuchtschirm in der Bindertechnik bei vergleichbarer Schichtdicke des Speicherleuchtstoffes eine geringere Röntgenquantenabsorption auf.

In der älteren EP-A-0 369 049, das einem Stand der Technik gemäß Art. 54(3) EPÜ darstellt, ist ein Verfahren zur Herstellung eines Speicherleuchtschirmes beschrieben, bei dem der Speicherleuchtstoff auf einen Träger aufgedampft und in einer Schutzgasatmosphäre oder im Vakuum getempert oder unter Vakuum und/oder Erwärmung gepreßt wird. Insbesondere das Preßverfahren liefert transparente Speicherleuchtstoffplatten. Der Vorteil der Transparenz ist, daß der auslesende Laserstrahl in dem Speichermedium nicht durch Streuung an Körnern des Materials aufgefächert werden kann. Die Verbreiterung des Auslesestrahles durch Streuung verschlechtert die Modulationsübertragungsfunktion des gesamten Systems erheblich. Durch die Verwendung eines transparenten Speicherleuchtstoffes, hergestellt z.B. durch Pressen des Leuchtstoffpulvers, wird die Verbreiterung des Laserstrahles beim Durchstrahlen des Speichermediums stark vermindert.

Das Pulverpreßverfahren hat jedoch drei Nachteile:
1. Es können Partikelgrenzen zwischen den Pulverpartikeln übrig bleiben, die beim Auslesevorgang für die auslesende elektromagnetische Strahlung als Streuzentren wirken. Die gestreute Auslesestrahlung liest dann auch Information von Orten aus, die ihr zeitlich nicht zugeordnet sind. Dadurch wird im resultierenden Bild der Störabstand verringert. Der Grund für das mögliche Übrigbleiben von Partikelgrenzen liegt darin, daß Pulverpartikel durch Druck nur deformiert werden können, wenn der Druck von einem Partikel zum nächsten so angekoppelt wird, daß auch dort die Versetzungen, die Träger der plastischen Verformung, anfangen, durch den Kristall zu laufen. Da die Partikel sich nur in einigen Punkten berühren, kann es leicht sein, daß ein Partikel nicht aus der geeigneten Richtung Druck erfährt, die erforderlich wäre, damit sich seine Versetzungen in Bewegung setzen.
2. Viele Alkalihalogenide erfahren bei hohem Druck einen Phasenübergang. Im Falle eines mit TlBr dotieren RbBr-Speicherleuchtstoffes liegt dieser Phasenübergang bei etwa 500 MPa. Dabei geht der RbBr-Speicherleuchtstoff von der kubisch flächenzentrierten NaCl-Struktur in die kubisch raumzentrierte CsClStruktur über. Der Übergang erfolgt unter Volumenverringerung und ist reversibel. So erfolgt bei Entlastung nach dem Preßvorgang wieder die Umwandlung in die NaCl-Struktur. Da dieser Phasenübergang nun unter Volumenvergrößerung abläuft, kann es zu Rissen und Sprüngen in dem Speichermedium führen, die ebenfalls für die auslesende elektromagnetische Strahlung als Streuzentren wirken.
3. Wegen der nötigen Ankopplung des Druckes von einem Pulverpartikel zum nächsten ist der erforderliche Druck zum Transparentpressen von Pulvern sehr hoch, im Falle von RbBr > 500 MPa, vorzugsweise 1000 MPa, so daß die Herstellung großflächiger Speichermedien sehr schwierig ist.

In der EP-A-0 350 391 ist die Herstellung sowie die Verwendung eines Einkristalles aus einem Lanthanid-Silikat bei einem Szintillator für Röntgen- und Gammastrahlen beschrieben. Der Einkristall findet als Röntgenstrahlendetektor Verwendung, der auf der Spontanemission des Einkristalles beruht.

Die Erfindung geht von der Aufgabe aus, einen Speicherleuchtschirm der eingangs genannten Art zu schaffen, der eine hohe Röntgenquantenabsorption bei hoher Abbildungsschärfe und guter Modulationsübertragungsfunktion aufweist und leicht herzustellen ist.

Die Aufgabe wird erfindungsgemäß dadurch gelöst, daß als Ausgangsmaterial ein für die Strahlen erster und zweiter Wellenlänge transparenter Einkristall verwendet wird, der derart gepreßt wird, daß seine Fläche vergrößert wird. Dadurch kann es verbleibende Partikelgrenzen nicht geben, da man ja keine Vielzahl von Körper sondern nur einen hat und dieser keine inneren Grenzen oder Hohlräume aufweist. Dadurch ergeben sich keine Streuzentren, so daß eine hohe Abbildungsschärfe erreicht wird. Durch den Preßvorgang können kleinere Einkristalle auf die für in der Röntgendiagnostik erforderliche große Fläche gebracht werden.

Der Preßvorgang bewirkt keine Entstehung von Spannungen, wenn der Einkristall getempert wird. Es hat sich als vorteilhaft erwiesen, wenn der Einkristall im Vakuum oder in einer Schutzgasatmosphäre gepreßt wird. Es hat sich weiterhin als vorteilhaft erwiesen, wenn der Einkristall auf eine Temperatur von 100 bis 400° C erhitzt und mit einem Druck von 1 bis 50 MPa gepreßt wird. Der Aufbau hoher Spannungen in dem Einkristall kann vermieden werden, wenn er mit einem vom Anfangswert bis zum Maximalwert ansteigenden Druck gepreßt wird.

Der erfindungsgemäße Speicherleuchtschirm wird also durch Pressung eines Einkristalles hergestellt. Durch die Verwendung von Einkristallen, die keine Partikelgrenzen, innere Grenzen oder Hohlräume aufweist, erhält man einen Speicherleuchtschirm, der frei von Streustrahlenzentren ist. Der erforderliche Preßdruck kann wesentlich geringer gehalten werden als bei der Herstellung von Speicherleuchtschirmen in Pulvertechnik, so daß die Preßkräfte zur Herstellung großer Flächen keine technischen Schwierigkeiten mehr darstellen. Der erforderliche Druck liegt deutlich unter den 500 MPa, die für einen pulverförmigen Speicherleuchtstoff mindestens erforderlich wären, so daß im Falle des RbBr-Speicherleuchtstoffes der störende reversible Phasenübergang noch nicht angeregt wird.

Die Umformung des Einkristalles durch Pressen wird zweckmäßigerweise unter Erwärmung durchgeführt. Dabei gilt, daß je höher die Temperatur ist, desto stärker die dynamische Rekristallisation angeregt wird. Die Rekristallisation ist ein Entfestigungsprozeß des Materials, der den Aufbau hoher Spannungen während der Umformung verhindert. Dadurch wird ein Bruch des Materials vermieden. Aus diesem Grund steigt die rißfreie Verformbarkeit mit steigender Temperatur.

Ein erfindungsgemäßer Speicherleuchtschirm ohne Streuzentren kann beispielsweise derart hergestellt werden, daß ein mit T1Br dotiertes RbBr, bzw. mit T1I dotiertes RbI oder andere geeignete Speicherleuchtstoffe in Einkristallform auf eine Temperatur von 100 bis 400° C, vorzugsweise 300° C, erhitzt werden. Dabei kann Vakuum angelegt werden. Die Bearbeitung des Einkristalles kann auch unter Schutzgas erfolgen. Anschließend wird ein Druck von z.B. 1 bis 50 MPa für einige Minuten bis einige Stunden angelegt. Dabei ist auf langsames Aufbauen des Druckes zu achten, damit der Einkristall nicht bricht. So kann beispielsweise ein würfelförmiger Einkristall von 15 cm Kantenlänge zu einer näherungsweise runden Platte von etwa 40 cm Durchmesser und etwa 2 cm Höhe umgeformt werden. Diese Platte weist keine inneren Streuzentren auf.

## Patentansprüche

1. Verfahren zur Herstellung eines einkristallinen stimulierbaren Speicherleuchtschirmes für die latente Speicherung von Röntgenstrahlenbildern, bei dem die Auslesung der Röntgenstrahlenbilder durch Anregung mittels Strahlen einer ersten Wellenlänge erfolgt, worauf Licht einer zweiten Wellenlänge emittiert wird, **dadurch gekennzeichnet,** daß als Ausgangsmaterial ein für die Strahlen erster und zweiter Wellenlänge transparenter Einkristall verwendet wird, der derart gepreßt wird, daß seine Fläche vergrößert wird.

2. Verfahren zur Herstellung eines Speicherleuchtschirmes nach Anspruch 1, **dadurch gekennzeichnet**, daß der Einkristall getempert wird.

3. Verfahren zur Herstellung eines Speicherleuchtschirmes nach Anspruch 1 oder 2, **dadurch gekennzeichnet**, daß der Einkristall unter Erwärmung gepreßt wird.

4. Verfahren zur Herstellung eines Speicherleuchtschirmes nach einem der Ansprüche 1 bis 3, **dadurch gekennzeichnet**, daß der Einkristall im Vakuum gepreßt wird.

5. Verfahren zur Herstellung eines Speicherleuchtschirmes nach einem der Ansprüche 1 bis 4, **dadurch gekennzeichnet**, daß der Einkristall in einer Schutzgasatmosphäre gepreßt wird.

6. Verfahren zur Herstellung eines Speicherleuchtschirmes nach einem der Ansprüche 1 bis 5, **dadurch gekennzeichnet**, daß der Einkristall auf eine Temperatur von 100 bis 400°C erhitzt wird.

7. Verfahren zur Herstellung eines Speicherleuchtschirmes nach einem der Ansprüche 1 bis 6, **dadurch gekennzeichnet**, daß der Einkristall mit einem Druck von 1 bis 50 MPa gepreßt wird.

8. Verfahren zur Herstellung eines Speicherleuchtschirmes nach einem der Ansprüche 1 bis 7, **dadurch gekennzeichnet**, daß der Einkristall mit einem vom Anfangswert bis zum Maximalwert ansteigenden Druck gepreßt wird.

## Claims

1. Process for the manufacture of a single-crystal, stimulable luminescent storage screen for the latent storing of X-ray images, where the read-out of the X-ray images takes place through excitation by means of radiation of a first wavelength, whereupon light of a second wavelength is emitted, characterized in that as initial material a single crystal which is transparent for the radiation of first and second wavelength is used, which is compressed in such a way that its surface is enlarged.

2. Process for the manufacture of a luminescent storage screen according to claim 1, characterized in that the single crystal is tempered.

3. Process for the manufacture of a luminescent storage screen according to claim 1 or 2, characterized in that the single crystal is compressed with heating.

4. Process for the manufacture of a luminescent storage screen according to one of claims 1 to 3, characterized in that the single crystal is compressed in a vacuum.

5. Process for the manufacture of a luminescent storage screen according to one of claims 1 to 4, characterized in that the single crystal is compressed in an atmosphere of protective gas.

6. Process for the manufacture of a luminescent storage screen according to one of claims 1 to 5, characterized in that the single crystal is heated to a temperature of 100 to 400°C.

7. Process for the manufacture of a luminescent storage screen according to one of claims 1 to 6, characterized in that the single crystal is compressed with a pressure of 1 to 50 MPa.

8. Process for the manufacture of a luminescent storage screen according to one of claims 1 to 7, characterized in that the single crystal is compressed with a pressure rising from the initial value to the maximum value.

## Revendications

1. Procédé pour fabriquer un écran luminescent monocristallin stimulable de mémorisation pour la mémorisation latente d'images radiographiques, selon lequel la lecture des images radiographiques s'effectue par excitation à l'aide d'un rayonnement possédant une première longueur d'onde, à la suite de quoi une lumière possédant une seconde longueur d'onde est émise, caractérisé par le fait qu'on utilise comme matériau de départ, un monocristal transparent pour les rayonnements possédant des première et seconde longueurs d'onde et que l'on presse ou moule de manière à accroître sa surface.

2. Procédé pour fabriquer un écran luminescent de mémorisation suivant la revendication 1, caractérisé en ce qu'on effectue un recuit du monocristal.

3. Procédé pour fabriquer un écran luminescent de mémorisation suivant la revendication 1 ou 2, caractérisé par le fait qu'on presse le monocristal tout en le chauffant.

4. Procédé pour fabriquer un écran luminescent de mémorisation suivant l'une des revendications 1 à 3, caractérisé par le fait qu'on presse le monocristal sous vide.

5. Procédé pour fabriquer un écran luminescent de mémorisation suivant l'une des revendications 1 à 5, caractérisé par le fait qu'on presse le monocristal dans une atmosphère de gaz protecteur.

6. Procédé pour fabriquer un écran luminescent de mémorisation suivant l'une des revendications 1 à 5, caractérisé par le fait qu'on chauffe le monocristal à une température de 100 à 400°C.

7. Procédé pour fabriquer un écran luminescent de mémorisation suivant l'une des revendications 1 à 6, caractérisé par le fait qu'on presse le monocristal avec une pression de 1 à 50 MPa.

8. Procédé pour fabriquer un écran luminescent de mémorisation suivant l'une des revendications 1 à 7, caractérisé par le fait qu'on presse le monocristal avec une pression qui augmente de la valeur initiale jusqu'à la valeur maximale.
